(19) **Europäisches Patentamt**

**European Patent Office**

**Office européen des brevets**

(11) **EP 0 601 352 B1**

(12) **EUROPÄISCHE PATENTSCHRIFT**

(45) Veröffentlichungstag und Bekanntmachung des Hinweises auf die Patenterteilung:
**16.10.1996 Patentblatt 1996/42**

(51) Int Cl.⁶: **H02P 3/08**

(21) Anmeldenummer: **93118321.4**

(22) Anmeldetag: **12.11.1993**

(54) **Bremseinrichtung für einen Reihenschluss-Kommutatormotor**

Braking device for a series commutator motor

Dispositif de freinage pour un moteur série à collecteur

(84) Benannte Vertragsstaaten:
**AT CH DE FR GB IT LI**

(30) Priorität: **05.12.1992 DE 4240972**

(43) Veröffentlichungstag der Anmeldung:
**15.06.1994 Patentblatt 1994/24**

(73) Patentinhaber: **Festo KG**
**D-73734 Esslingen (DE)**

(72) Erfinder:
• **Asmus, Torsten**
**D-73728 Esslingen (DE)**

• **Nothdurft, Hansjörg**
**D-73734 Esslingen (DE)**

(74) Vertreter: **Vetter, Hans, Dipl.-Phys. Dr. et al**
**Patentanwälte Dipl.-Ing. Rudolf Magenbauer**
**Dipl.-Phys. Dr. Otto Reimold**
**Dipl.-Phys. Dr. Hans Vetter,**
**Dipl.-Ing. Martin Abel,**
**Hölderlinweg 58**
**73728 Esslingen (DE)**

(56) Entgegenhaltungen:
**DE-A- 3 539 841          US-A- 4 241 866**

**Beschreibung**

Die Erfindung betrifft eine Bremseinrichtung für einen Reihenschluß-Kommutatormotor, mit einem Anker und wenigstens einer in Reihe dazu geschalteten Feldwicklung, die im Motorbetrieb von einer Versorgungsspannung beaufschlagt sind, wobei ein mit der Feldwicklung verbundener und im Bremsbetrieb über die Feldwicklung entladbarer Kondensator aufladbar ist, mit einer Umschalteinrichtung für den Bremsbetrieb, in dem die umgepolte Feldwicklung mit dem Anker einen geschlossenen, wenigstens einpolig von der Versorgungsspannung abgetrennten Stromkreis bilden, und mit einem steuerbaren Widerstand zur Begrenzung des Stroms durch die Feldwicklung im Bremsbetrieb.

Eine derartige Bremseinrichtung ist aus der DE-PS 35 39 841 bekannt. Bei der bekannten Bremseinrichtung wird ein Kondensator während des Motorbetriebs über eine Diode geladen und beim Umschalten im Bremsbetrieb über die Feldwicklung entladen, wodurch eine Anlauferregung in der Feldwicklung entsteht, die im Anker eine Spannung induziert. Im Bremsbetrieb bildet die umgepolte Feldwicklung mit dem Anker einen geschlossenen Stromkreis, wobei der Strom über die Diode, den Anker und die Feldwicklung fließt, wobei dieser Strom wiederum das umgepolte Magnetfeld der Feldwicklung verstärkt. Hierdurch erfolgt ein Aufschaukeln von Strom und Magnetfeld, das den Nachteil mit sich bringt, daß der Motor zum einen sehr abrupt abgebremst wird, wodurch eine hohe Belastung der mechanisch bewegten Teile und Lager entsteht, und daß zum anderen die überschüssige Bremsenergie nahezu vollständig in einem in Reihe zum Anker und zur Feldspule geschalteten Bremswiderstand in Wärme umgewandelt wird. Durch das Aufschaukeln von Strom und Magnetfeld fließt ein hoher Strom, der beispielsweise die Bürsten nicht unerheblich belastet. Will man den Widerstandwert des Bremswiderstands zum Zwecke einer sanften Bremsung steuern bzw. regeln, so ist eine aufwendige elektronische Schaltung hierfür erforderlich.

Aus US-A-4241866 ist es bekannt, die Bremsung eines Reitenschluß-Kommutatormotors in 2 Stufen durchzuführen, wobei die 1. Stufe gemäß der in DE-A-3539841 beschriebenen Bremsung erfolgt. Bei Erreichen einer vorgegebenen Motordrehzahl setzt die 2. Stufe mit niedrigeren Bremsmoment ein, wobei der Erregerstrom mittels des steuerbaren Widerstands drehzahlabhängig verändert wird.

Eine Aufgabe der vorliegenden Erfindung besteht daher darin, eine Bremseinrichtung der eingangs genannten Gattung zu schaffen, bei der auf einfache und kostengünstige Weise der Bremsstrom reduziert und eine sanfte Bremsung erzielt wird.

Diese Aufgabe wird erfindungsgemäß dadurch gelöst, daß der parallel zum Anker geschaltete steuerbare Widerstand im Motorbetrieb gesperrt und im Bremsbetrieb zur Aufteilung des über die Kohlebürsten fließenden Bremsstroms in einen Erregerstrom durch die umgepolte Feldwicklung und einen Kurzschlußstrom durch diesen steuerbaren und auch parallel zur Feldwicklung geschalteten Widerstand stromleitend ist.

Der Vorteil dieser Bremseinrichtung besteht insbesondere darin, daß der Bremsstrom durch die Kohlebürsten in einen Feldwicklungsstrom und einen Strom durch den steuerbaren Widerstand an der Feldwicklung vorbei aufgeteilt wird, so daß ein starkes Aufschaukeln von Erregerfeld und Bremsstrom verhindert wird und der von der induzierten Ankerspannung getriebene Strom über die Kohlebürsten reduziert wird. Dies führt zu einer geringeren Belastung der Kohlebürsten und zu einer sanfteren Bremsung bei sehr geringem Schaltungsaufwand. Gleichzeitig wird die entstehende Wärme reduziert.

Durch die in den Unteransprüchen aufgeführten Maßnahmen sind vorteilhafte Weiterbildungen und Verbesserungen der im Anspruch 1 angegebenen Bremseinrichtung möglich.

In vorteilhafter Weise sind Mittel zur Steuerung des Widerstandswerts des steuerbaren Widerstands in Abhängigkeit der Schaltstellung der Umschalteinrichtung vorgesehen. Diese Mittel steuern den steuerbaren Widerstand zweckmäßigerweise im Sinne einer Strombegrenzung des Stroms durch die Feldwicklung. Hierdurch wird das unerwünschte weitere Aufschaukeln von Erregerfeld und Bremsstrom verhindert und der Strom auf einen insgesamt definierten und gewünschten Wert begrenzt. Dies führt auch zu einem definierten gewünschten Bremsvorgang, der durch die Einstellung des maximalen Stroms durch die Feldwicklung ebenfalls eingestellt werden kann.

Eine einfache und schaltungsmäßig günstige Realisierung erfolgt dadurch, daß der steuerbare Widerstand als Transistor ausgebildet ist. Zur Einstellung seines Widerstandswerts ist ein im Bremsbetrieb in Reihe zur Feldwicklung schaltbarer Widerstand vorgesehen, der als Basis-Emitter-Widerstand geschaltet ist. Hierdurch kann der Widerstandswert dieses als Transistor ausgebildeten Widerstands und damit die Einstellung des maximalen Feldwicklungsstroms einfach, kostengünstig und genau eingestellt werden.

Die Umschalteinrichtung besteht in einer zweckmäßigen Ausgestaltung aus zwei Umschaltern an beiden Anschlüssen der Feldwicklung, wobei deren Schaltfolge in Abhängigkeit vom Anschluß des Kondensators synchron oder jeweils in definierter Reihenfolge kurz nacheinander sein kann. Eine kurz nacheinander stattfindende Schaltfolge ist dann erforderlich, wenn der Kondensator in der Weise angeschlossen ist, daß dessen vorzeitige Entladung noch verhindert werden muß, bevor der Kreis zwischen Feld- und Ankerwicklung geschlossen ist um seine gesamte gespeicherte Energie für die Starterregung bei Bremsbeginn ausnutzen zu können.

Im Bremsbetrieb bilden der steuerbare Widerstand, eine Diode und der Anker einen geschlossenen Stromkreis, wobei der Verknüpfungspunkt der Diode mit dem Anker ständig mit einem Pol der Versorgungsspannung direkt oder über eine zweite Feldwicklung verbunden ist. Hierdurch kann im Motorbetrieb der mit der Feldwicklung verbundene Kondensator über die Diode geladen werden, während im Bremsbetrieb eine Entladung nur über die Feldwicklung möglich ist.

Zwei Ausführungsbeispiele der Erfindung sind in der Zeichnung dargestellt und in der nachfolgenden Beschreibung näher erläutert. Es zeigen:

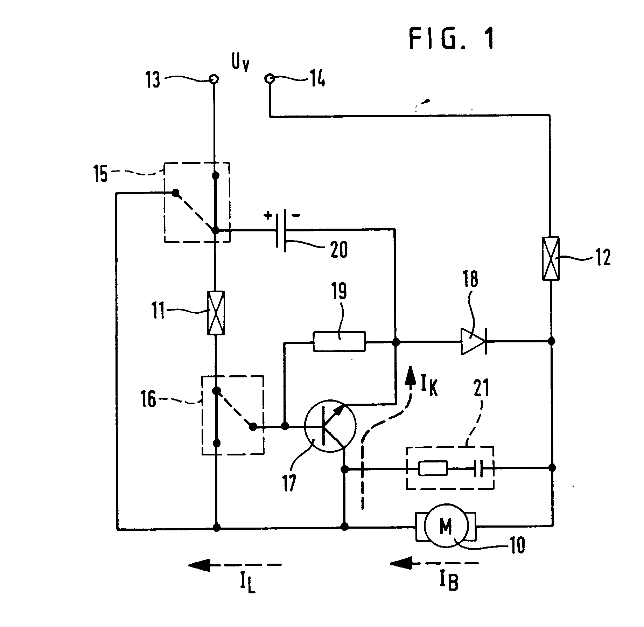

Figur 1: das Schaltbild einer Bremseinrichtung als erstes Ausführungsbeispiel der Erfindung, und

Figur 2: ein modifiziertes Schaltbild dieser Bremseinrichtung als zweites Ausführungsbeispiel.

Beim ersten Ausführungsbeispiel besteht ein Reihenschluß-Kommutatormotor aus einem Anker 10 und zwei Feldwicklungen 11,12 und ist im Motorbetrieb mit zwei Anschlußklemmen 13,14 verbunden, die von einer Versorgungsspannung Uv beaufschlagt sind. Dabei ist ein Anschluß der ersten Feldwicklung 11 über einen ersten Umschalter 15 mit der Anschlußklemme 13 und der andere Anschluß über einen zweiten Umschalter 16 mit dem Anker 10 verbunden, dessen zweiter Anschluß über die zweite Feldwicklung 12 mit der Anschlußklemme 14 verbunden ist. Die beiden Umschalter 15,16 bilden zusammen eine synchron schaltende Umschalteinrichtung, deren beiden Schaltkontakte im Motorbetrieb die in der Figur gezeigte Schaltstellung einnehmen, während sie nach dem Ausschalten des Motors die gestrichelt dargestellte Schaltstellung einnehmen.

Die Reihenschaltung der Kollektor-Emitter-Strecke eines bipolaren Transistors 17 mit einer Diode 18 überbrückt permanent den Anker 10. Ein Basis-Emitter-Widerstand 19 ist zwischen die Basis und den Emitter des Transistors 17 geschaltet. Weiterhin ist der mit der Diode 18 verbundene Emitter des Transistors 17 über einen Kondensator 20 mit demjenigen Anschluß der ersten Feldwicklung 11 verbunden, die über den ersten Umschalter 15 mit der Anschlußklemme 13 verbindbar ist. In der zweiten Schaltstellung des ersten Umschalters 15 ist dieser Anschluß der ersten Feldwicklung 11 direkt mit dem Anker 10 verbunden. Der gegenüberliegende Anschluß der ersten Feldwicklung 11 ist in der dargestellten Schaltstellung des zweiten Umschalters 16 mit dem Anker 10 und in der zweiten, gestrichelt dargestellten Schaltstellung mit der Basis des Transistors 17 verbindbar. Zum Schutz des Transistors 17 und der Diode 18 gegen induktive Spannungsspitzen des Motors ist parallel zum Anker 10 ein RC-Glied 21 geschaltet.

Im Motorbetrieb bilden der Anker 10 und die beiden Feldwicklungen 11,12 eine an die Anschlußklemmen 13,14 angeschlossene Reihenschaltung. Der Kondensator 20 wird über die Diode 18 geladen. Der Transistor 17 ist gesperrt.

Wird nun der Motor ausgeschaltet, so erfolgt eine Umschaltung der Umschalteinrichtung in eine Schaltposition, in der die beiden Umschalter 15,16 die gestrichelt dargestellte Schaltstellung einnehmen, wobei der Umschalter 15 eine einpolige Trennung von der Versorgungsspannung Uv vornimmt. Der Kondensator 20 entlädt sich über den Widerstand 19 und die erste Feldwicklung 11, wodurch die Feldspule erregt wird und im Anker 10 eine Spannung induziert, die zu einem Bremsstrom $I_B$ führt. Infolge des durch den Widerstand 19 fließenden Stroms wird der Transistor 17 aufgesteuert, so daß sich der Bremsstrom $I_B$ in einen Kurzschlußstrom $I_K$ durch den Transistor 17 und einen Erregerstrom für die erste Feldwicklung 11 $I_L$ aufspaltet ($I_B = I_L + I_K$). Dabei erfolgt durch den Transistor 17 automatisch eine Strombegrenzung des Erregerstroms $I_L$ auf einen Wert von

$$I_{L\,max} \cong 0{,}7 \text{ V}/R_{BE}$$

Dabei ist $R_{BE}$ der Widerstandswert des Basis-Emitter-Widerstands 19, und der Wert von 0,7 V ist der Spannungsabfall an der Basis-Emitter-Diode des Transistors 17. Hieraus geht hervor, daß sich der Erregerstrom für die erste Feldwicklung 11 automatisch auf einen Wert begrenzen läßt, der von der Wahl des Widerstands 19 abhängt. Da der Strom durch die erste Feldwicklung 11 somit im Bremsbetrieb begrenzt ist, wird ein Aufschaukeln von Erregerfeld und Bremsstrom verhindert, und der von der induzierten Ankerspannung getriebene Strom über die nicht dargestellten Kohlebürsten des Ankers 10 übersteigt nicht einen maximalen Wert. Durch Wahl des Widerstands 19 läßt sich somit auch der maximale Bremsstrom und das Bremsverhalten des Motors insgesamt einstellen.

Die zweite Feldwicklung 12 ist beim Bremsvorgang nicht beteiligt. Bei Reihenschluß-Kommutatormotoren mit nur einer Feldwicklung 11 kann somit diese zweite Feldwicklung 12 ohne Veränderung der beschriebenen Vorgänge entfallen.

In einer alternativen Ausgestaltung könnte der Durchgangswiderstand der Kollektor-Emitter-Strecke des Transistors 17 bzw. dessen Aufsteuerung auch in Abhängigkeit eines in Reihe zur ersten Feldwicklung 11 geschalteten Stromfühlers geregelt werden.

Anstelle eines Transistors 17 als einstellbarer Widerstand können auch andere bekannte einstellbare Widerstände treten, die wenigstens zwei umschaltbare Widerstandswerte aufweisen, nämlich einen sehr hohen Widerstandswert für den Motorbetrieb und einen geringen Wert für den Kurzschlußbetrieb, wobei dieser geringe Wert auch in Stufen oder kontinuierlich einstellbar ausgebildet sein kann.

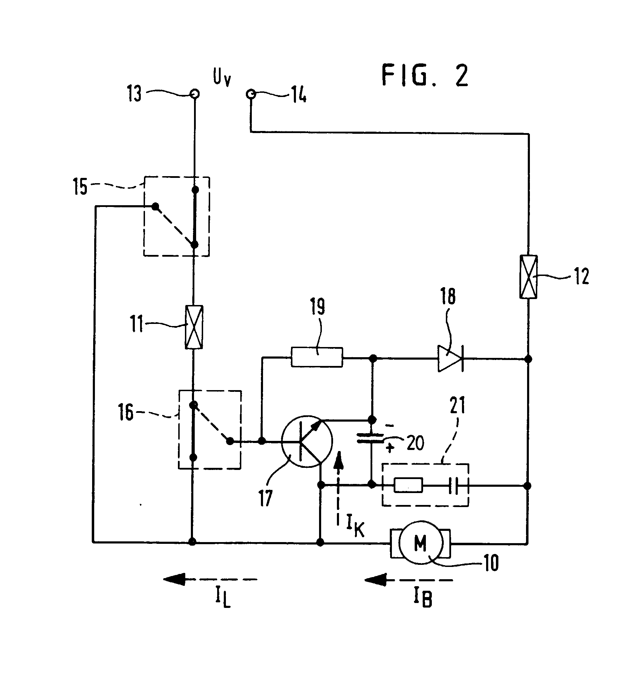

Das in Figur 2 dargestellte zweite Ausführungsbeispiel entspricht weitgehend dem ersten Ausführungsbeispiel, so daß gleiche oder gleichwirkende Bauteile mit denselben Bezugszeichen versehen und nicht nochmals beschrieben sind. Schaltungsmäßig besteht der einzige Unterschied darin, daß der Kondensator 20 nicht mehr zwischen dem Umschalter 15 und dem Emitter des Transistors 17, sondern jetzt zwischen diesen Emitter und den Kollektor des Transistors 17 geschaltet ist. Er überbrückt somit diese Kollektor-Emitter-Strecke.

Der Kondensator 20 wird jetzt nicht mehr parallel zur Reihenschaltung der Feldwicklung 11 mit dem Anker 10 geladen, sondern jetzt parallel zu diesem Anker 10, so daß er im Motorbetrieb auf die anfallende Ankerspannung geladen wird. Der Kontakt zur Basis des Transistors 17 bzw. zum Basis-Emitter-Widerstand ist in der durchgezogen dargestellten Schaltstellung des Umschalters 16 offen. In der gestrichelt dargestellten Schaltstellung des Umschalters 16 wird der Kondensator dagegen mit dem sonst ankerseitigen Ausgang der Feldwicklung 11 verbunden, während der sonst netzseitige Ausgang der Feldwicklung 11 dann in der gestrichelt dargestellten Schaltstellung des Umschalters 15 direkt zum Anker 10 bzw. zum Kollektoranschluß des Transistors 17 geführt wird. Der Kondensator 20 entlädt sich erst dann über den Widerstand 19 und die erste Feldwicklung 11, wenn sich die Kontakte beider Umschalter 15,16 in der gestrichelt dargestellten Schaltstellung befinden. Beim ersten Ausführungsbeispiel muß der Schaltzeitpunkt des Umschalters 16 geringfügig dem des Umschalters 15 nacheilen, damit sich der Kondensator 20 zur Ausnutzung seiner gesamten gespeicherten Energie für die Starterregung erst dann entladen kann, wenn der Kreis zwischen Feld- und Ankerwicklung geschlossen ist. Diese Nacheilung ist beim zweiten Ausführungsbeispiel nicht mehr erforderlich.

**Patentansprüche**

1. Bremseinrichtung für einen Reihenschluß-Kommutatormotor, mit einem Anker (10) und wenigstens einer in Reihe dazu geschalteten Feldwicklung (11,12), die im Motorbetrieb von einer Versorgungsspannung ($U_v$) beaufschlagt sind, wobei ein mit der Feldwicklung (11) verbundener und im Bremsbetrieb über die Feldwicklung (11) entladbarer Kondensator (20) aufladbar ist, mit einer Umschalteinrichtung (15,16) für den Bremsbetrieb, in dem die umgepolte Feldwicklung (11) mit dem Anker einen geschlossenen, wenigstens einpolig von der Versorgungsspannung abgetrennten Stromkreis bilden, und mit einem steuerbaren Widerstand (17) zur Begrenzung des Stroms durch die Feldwicklung im Bremsbetrieb, dadurch gekennzeichnet, daß der parallel zum Anker (10) geschaltete steuerbare Widerstand (17) im Motorbetrieb gesperrt und im Bremsbetrieb zur Aufteilung des über die Kohlebürsten fließenden Bremsstroms in einen Erregerstrom durch die umgepolte Feldwicklung (11) und einen Kurzschlußstrom durch diesen steuerbaren Widerstand (17) stromleitend ist.

2. Bremseinrichtung nach Anspruch 1, dadurch gekennzeichnet, daß Mittel zur Steuerung des Widerstandswerts des steuerbaren Widerstands (17) in Abhängigkeit der Schaltstellung der Umschalteinrichtung (15,16) vorgesehen sind.

3. Bremseinrichtung nach Anspruch 2, dadurch gekennzeichnet, daß durch diese Mittel der Widerstandswert des steuerbaren Widerstands (17) im Sinne einer Strombegrenzung des Stroms durch die Feldwicklung (11) gesteuert oder geregelt wird.

4. Bremseinrichtung nach einem der vorhergehenden Ansprüche, dadurch gekennzeichnet, daß der steuerbare Widerstand (17) als Transistor ausgebildet ist.

5. Bremseinrichtung nach Anspruch 4, dadurch gekennzeichnet, daß ein im Bremsbetrieb in Reihe zur Feldwicklung (11) schaltbarer Widerstand (19) vorgesehen ist, der als Basis-Emitter-Widerstand des als bipolarer Transistor ausgebildeten Transistors (17) geschaltet ist.

6. Bremseinrichtung nach Anspruch 5, dadurch gekennzeichnet, daß der Widerstandswert ($R_{BE}$) des Widerstands (19) zur Einstellung des maximalen Feldwicklungsstroms ($I_L$) gemäß

$$I_{Lmax} \cong 0{,}7 \ V / R_{BE}$$

ausgewählt ist.

7. Bremseinrichtung nach einem der vorhergehenden Ansprüche, dadurch gekennzeichnet, daß die Umschalteinrichtung (15,16) aus zwei synchron betätigten Umschaltern an beiden Anschlüssen der Feldwicklung (11) besteht und der Kondensator (20) parallel zum steuerbaren Widerstand (17) geschaltet ist.

8. Bremseinrichtung nach einem der Ansprüche 1 bis 6, dadurch gekennzeichnet, daß die Umschalteinrichtung (15,16) aus zwei Umschaltern an den beiden Anschlüssen der Feldwicklung (11) besteht, wobei der Schaltzeitpunkt des die Entladung des Kondensators (20) über die Feldwicklung (11) steuernden Umschalters (16) jeweils gegenüber dem des anderen Umschalters (15) geringfügig nacheilt, und der Kondensator (20) fest mit der Feldspule (11) an einem der Umschalter der Umschalteinrichtung (15,16) verbunden ist.

9. Bremseinrichtung nach Anspruch 7 oder 8, dadurch gekennzeichnet, daß der Kondensator (20) über eine Diode (18) mit dem Anker (10) verbunden ist.

10. Bremseinrichtung nach einem der vorhergehenden Ansprüche, dadurch gekennzeichnet, daß der steuerbare Widerstand (17), eine Diode (18) und der Anker (10) einen geschlossenen Stromkreis bilden.

**11.** Bremseinrichtung nach Anspruch 10, dadurch gekennzeichnet, daß der Verknüpfungspunkt der Diode (18) mit dem Anker (10) ständig mit einem Pol (14) der Versorgungsspannung direkt oder über eine zweite Feldwicklung (12) verbunden ist.

**Claims**

**1.** Braking device for a series-wound commutator motor with an armature (10) and at least one field winding (11, 12) connected in series therewith, to which a supply voltage ($U_V$) is applied during motor operation, a capacitor (20) connected to the field winding (11) and dischargeable via the field winding (11) during braking operation being chargeable, with a change-over device (15, 16) for braking operation, whereby the polarity-reversed field winding (11) forms a closed circuit with the armature, at least one pole being disconnected from the supply voltage, and with a controllable resistor (17) for the limitation of the current flow through the field winding during braking operation, characterized in that the controllable resistor (17) parallel-connected with the armature (10) is inhibited during motor operation and conductive during braking operation for the division of the braking current flowing through the carbon brushes into an excitation current through the polarity-reversed field winding (11) and a short-circuit current through the controllable resistor (17).

**2.** Braking device according to Claim 1, characterized in that means for controlling the resistance value of the controllable resistor (11) in dependence on the switch position of the change-over device (15, 16) are provided.

**3.** Braking device according to Claim 2, characterized in that the resistance value of the controllable resistor (17) is controlled or regulated to limit the flow of current through the field winding (11) by said means.

**4.** Braking device according to any of the preceding claims, characterized in that the controllable resistor (17) is designed as a transistor.

**5.** Braking device according to Claim 4, characterized in that a switchable resistor (19) connected in series with the field winding (11) during braking operation is provided, said resistor being switched as a base-emitter resistor of the transistor (19) designed as a bipolar transistor.

**6.** Braking device according to Claim 5, characterized in that the resistance value ($R_{BE}$) of the resistor (19) is selected in accordance with the formula

$$I_{L\,max} \cong 0.7 \text{ V} / R_{BE}$$

for adjusting the maximum field winding current ($I_L$).

**7.** Braking device according to any of the preceding claims, characterized in that the change-over device (15, 16) comprises two synchronously operated change-over switches on the two connections of the field winding (11) and the capacitor (20) is parallel-connected with the controllable resistor (17).

**8.** Braking device according to any of Claims 1 to 6, characterized in that the change-over device (15, 16) comprises two change-over switches on the two connections of the field winding (11), the switching time of the change-over switch (16) controlling the discharge of the capacitor (20) via the field winding (11) slightly lagging behind the switching time of the other change-over switch (15) and the capacitor (20) being permanently connected to the field winding (11) on either of the change-over switches of the change-over device (15, 16).

**9.** Braking device according to Claim 7 or 8, characterized in that the capacitor (20) is connected to the armature (10) via a diode (18).

**10.** Braking device according to any of the preceding claims, characterized in that the controllable resistor (17), a diode (18) and the armature (10) together form a closed circuit.

**11.** Braking device according to Claim 10, characterized in that the linkage point between the diode (18) and the armature (10) is permanently connected to a pole (14) of the supply voltage either directly or via a second field winding (12).

**Revendications**

**1.** Dispositif de freinage pour un moteur série à collecteur comportant un induit (10) et au moins un enroulement de champ (11, 12) monté en série avec celui-ci, qui pendant le fonctionnement en moteur reçoivent une tension d'alimentation (Uv), un condensateur (20), relié à l'enroulement de champ (11) et déchargeable pendant le fonctionnement en frein à travers l'enroulement de champ (11), et étant rechargeable, comportant un dispositif de commutation (15, 16) pour le fonctionnement en frein, dans lequel l'enroulement de champ (11) de polarité inversée forme avec l'induit un circuit électrique fermé, séparé au moins unipolairement de la tension d'alimentation, et comportant une résistance commandable (17) pour limiter le courant à travers l'enroulement de champ, pendant le fonctionnement en frein, caractérisé en ce que la résistance commandable (17), montée en parallèle à l'induit (10), est non-conductrice pendant le fonctionnement en moteur et conduit le courant pendant le fonctionnement en frein, pour la répartition du courant de freinage, passant par les balais, en un courant d'excitation à travers l'enroulement de champ de polarité inversée et un courant de court-circuit à travers cette résistance commandable (17).

2.  Dispositif de freinage selon la revendication 1, caractérisé en ce que sont prévus des moyens pour la commande de la valeur de la résistance commandable (17) en fonction de la position de commutation du dispositif de commutation (15, 16).

3.  Dispositif de freinage selon la revendication 2, caractérisé en ce que par ces moyens la valeur de la résistance commandable (17) est commandée ou réglée au sens d'une limitation du courant par l'enroulement de champ (11).

4.  Dispositif de freinage selon l'une des revendications précédentes, caractérisé en ce que la résistance commandable (17) est conformée en transistor.

5.  Dispositif de freinage selon la revendication 4, caractérisé en ce qu'il est prévu une résistance (19), apte à être mise en série, pendant le fonctionnement en frein, avec l'enroulement de champ (11), qui est montée en tant que résistance d'émetteur-base du transistor (17) conformé en transistor bipolaire.

6.  Dispositif de freinage selon la revendication 5, caractérisé en ce que la valeur de résistance ($R_{BE}$) de la résistance (19) est choisie, pour le réglage du courant d'enroulement de champ maximal ($I_L$), suivant la formule

$$I_{L\,max} \cong 0,7 \text{ V} / R_{BE}.$$

7.  Dispositif de freinage selon l'une des revendications précédentes, caractérisé en ce que le dispositif de commutation (15, 16) est constitué de deux commutateurs actionnés de manière synchrone aux deux branchements de l'enroulement de champ (11) et en ce que le condensateur (20) est monté en parallèle à la résistance commandable (17).

8.  Dispositif de freinage selon l'une des revendications 1 à 6, caractérisé en ce que le dispositif de commutation (15, 16) est constitué de deux commutateurs aux deux branchements de l'enroulement de champ (11), l'instant de commutation du commutateur (16), commandant la décharge du condensateur (20) par l'enroulement de champ (11), étant chaque fois légèrement en retard par rapport à celui de l'autre commutateur (15), et le condensateur (20) étant fixement relié avec la bobine de champ (11), au niveau de l'un des commutateurs du dispositif de commutation (15, 16).

9.  Dispositif de freinage selon la revendication 7 ou 8, caractérisé en ce que le condensateur (20) est relié à l'induit (10) par une diode (18).

10. Dispositif de freinage selon l'une des revendications précédentes, caractérisé en ce que la résistance commandable (17), une diode (18) et l'induit (10) forment un circuit électrique fermé.

11. Dispositif de freinage selon la revendication 10, caractérisé en ce que le point de liaison de la diode (18) avec l'induit (10) est relié en permanence avec un pôle (14) de la tension d'alimentation, directement ou par un second enroulement de champ (12).

FIG. 1

FIG. 2